# EUROPEAN PATENT SPECIFICATION

(11) **EP 2 833 448 B1**
(45) Date of publication and mention of the grant of the patent: **15.11.2017**
(21) Application number: 13769208.3
(22) Date of filing: 21.03.2013
(51) Int. Cl.: H01M 4/62, H01M 4/13, H01M 4/04, H01M 4/139

(54) **COMPOSITE PARTICLES FOR NEGATIVE ELECTRODES OF SECONDARY BATTERIES, USE OF SAME, METHOD FOR PRODUCING SAME, AND BINDER COMPOSITION**
VERBUNDSTOFFTEILCHEN FÜR NEGATIVE ELEKTRODEN VON SEKUNDÄRBATTERIEN, VERWENDUNG DAVON, VERFAHREN ZUR HERSTELLUNG DAVON UND BINDEMITTELZUSAMMENSETZUNG
PARTICULES COMPOSITES POUR ÉLECTRODES NÉGATIVES DE BATTERIES SECONDAIRES, LEUR UTILISATION, LEUR PROCÉDÉ DE PRODUCTION, ET COMPOSITION DE LIANT

(30) Priority: 26.03.2012 JP 2012069222
(43) Date of publication of application: 04.02.2015
(73) Proprietor: Zeon Corporation, Tokyo 100-8246 (JP)
(72) Inventor: OOTANI, Yuuko, Tokyo 100-8246 (JP)
(74) Representative: Maiwald Patentanwalts GmbH
(86) International application number: PCT/JP2013/058153
(87) International publication number: WO 2013/146548

(56) References cited:
- EP-A1- 2 660 908
- WO-A1-2012/026583
- JP-A- 2011 204 573
- JP-A- 2012 009 775
- JP-A- 2012 243 476
- JP-A- 2012 256 541

## Description

### Field

The present invention relates to a secondary battery negative electrode composite particle, a secondary battery negative electrode material, a secondary battery negative electrode, a method for producing the secondary battery negative electrode composite particle, and a secondary battery. In addition, a secondary battery negative electrode binder composition is disclosed.

### Background

A lithium-ion secondary battery is capable of being made in a small, lightweight size, and has properties of high energy density and capability of being charged and discharged in a repeated manner. Taking advantage of such properties, demand for lithium-ion secondary batteries is now rapidly growing. For example, taking advantage of high energy density, lithium-ion batteries are utilized in the fields of, e.g., mobile phones and laptop personal computers. With the expansion and development of their usage, there are demands for further improvement on lithium-ion secondary batteries such as lower resistance, higher capacity, and improved mechanical properties.

In prior art, manufacture of electrodes for secondary batteries such as lithium-ion secondary batteries usually involves preparing a slurry containing an electrode active material and a binder, coating a current collector with the slurry, and drying the slurry (coating method).

By the way, there has been proposed a method for producing an electrode for electrochemical elements wherein the method involves spray drying a slurry of an electrode composition containing an electrode active material, an electroconductive material, and a binder to make powders, and then subjecting the powders to pressure molding, to form an electrode (Patent Literature 1).
Patent Literature 2 relates to a specific binder composition for a secondary battery negative electrode.

### Citation List

### Patent Literature

Patent Literature 1: International Publication No. WO2010/24327
Patent Literature 2: JP 2011-204573 A

### Summary

### Technical Problem

When the technique involving pressure molding of composite particles described in Patent Literature 1 is applied to the formation of electrodes for secondary batteries in place of the aforementioned coating method, it would be expected to obtain the effects such as easy battery production and a variety of improvements in battery performances as a result of increased uniformity of an electrode active material layer by reduced migration. However, when an active material for secondary battery electrodes is formulated in a form of composite particles and then subjected to pressure molding, the resultant tends to have insufficient bonding strength between the electrode active material layer and a current collector. Consequently, it is difficult to improve performances such as cycle property.

Accordingly, it is an object of the present invention to provide a secondary battery with improvement in a variety of battery performances such as cycle property, which can be easily produced. It is another object of the present invention to provide components for producing the secondary battery, and a method for producing the secondary battery.

### [Solution to Problem]

The present inventors have conducted studies for solving the aforementioned problems. As a result, the present inventors have conceived of using in a binder an acrylonitrile-butadiene copolymer (NBR) or analogous polymers thereof, which has been considered relatively undesirable in the coating method, in place of a styrenebutadiene-based polymer (SBR), which has been considered preferable in the prior-art coating method.

When NBR is used in the binder, the bonding strength between the electrode active material layer and the current collector can be sufficiently elevated even in the technique involving pressure molding of the composite particles. However, the use of NBR for the binder tends to cause a disadvantage of decreased durability of the electrode.

Then the present inventors have further conducted studies on this matter. As a result, the present inventors have found out that the decrease in battery performances is due to organic compounds produced in the side reactions of NBR polymerization which are dissolved in an electrolyte solution and transferred to the positive electrode side to cause oxidation reactions. The present inventors further found out that the use of NBR that has been prepared with reduced concentration of the organic compounds can comprehensively solve the aforementioned problems, to thereby complete the present invention.

That is, the followings are provided according to the present invention.

(1) A secondary battery negative electrode composite particle comprising a negative electrode active material and a particulate polymer,
   wherein the particulate polymer includes 10% by weight to 60% by weight of a (meth)acrylonitrile monomer unit and 35% by weight to 85% by weight of an aliphatic conjugated diene monomer unit; and
   a residual amount of an organic compound having an unsaturated bond and a boiling point of 150°C to 300°C is 500 ppm or less as a ratio relative to an amount of the particulate polymer.
(2) The secondary battery negative electrode composite particle according to (1), wherein the particulate polymer further includes an ethylenically unsaturated carboxylic acid monomer unit.
(3) A secondary battery negative electrode material comprising the secondary battery negative electrode composite particle according to (1) or (2).
(4) A secondary battery negative electrode, comprising a current collector, and an active material layer provided on the current collector, the active material formed from the secondary battery negative electrode material according to (3).
(5) The secondary battery negative electrode according to (4), wherein the active material layer is a layer formed by pressure molding of the secondary battery negative electrode material.
(6) The secondary battery negative electrode according to (5), wherein the pressure molding is roll pressure molding.
(7) A method for producing the secondary battery negative electrode composite particle according to (1) or (2), the method comprising the steps of:
   dispersing in water a negative electrode active material and a composition containing a particulate polymer to obtain a slurry composition; and
   granulating the slurry composition,
   wherein the particulate polymer includes 10% by weight to 60% by weight of a (meth)acrylonitrile monomer unit and 35% by weight to 85% by weight of an aliphatic conjugated diene monomer unit, and
   a residual amount of an organic compound having an unsaturated bond and a boiling point of 150°C to 300°C in the composition is 500 ppm or less as a ratio relative to an amount of the particulate polymer.
(8) A secondary battery comprising the secondary battery negative electrode according to any one of (4) to (6).
   In addition, herein disclosed is a secondary battery negative electrode binder composition, comprising 10% by weight to 60% by weight of a (meth)acrylonitrile monomer unit and 35% by weight to 85% by weight of an aliphatic conjugated diene monomer unit,
   wherein a residual amount of an organic compound having an unsaturated bond and a boiling point of 150 to 300 °C is 500 ppm or less as a ratio relative to an amount of the particulate polymer.

### Advantageous Effects of Invention

The secondary battery negative electrode composite particle of the present invention, as well as the secondary battery negative electrode material, and the secondary battery negative electrode
of the present invention which have the secondary battery negative electrode composite particle, can provide the secondary battery of the present invention with improvement in a variety of battery performances such as cycle property, which can be easily produced. According to the method for producing the secondary battery negative electrode composite particle of the present invention, the secondary battery negative electrode composite particle of the present invention can be easily produced.

### Description of Embodiments

The present invention will be described hereinbelow in detail by way of embodiments and exemplifications. However, the present invention is not limited to the following embodiments and exemplifications and may be optionally modified and practiced without departing from the scope of the claims of the present invention and equivalents thereto.

As used herein, a "positive electrode active material" means an electrode active material for a positive electrode, and a "negative electrode active material" means an electrode active material for a negative electrode. In addition, a "positive electrode active material layer" means an electrode active material layer provided on a positive electrode, and a "negative electrode active material layer" means an electrode active material layer provided on a negative electrode.

### (1. Composite Particle)

The composite particle of the present invention is a secondary battery negative electrode composite particle including a negative electrode active material and particulate polymer.

### (1-1. Negative Electrode Active Material)

The negative electrode active material is an electrode active material for a negative electrode, and is a material which donates and accepts electrons at the negative electrode of a secondary battery.

For example, when the secondary battery of the present invention is a lithium-ion secondary battery, a substance capable of storing and releasing lithium is usually used as the negative electrode active material. Examples of the substance capable of storing and releasing lithium may include metal-based active materials, carbon-based active materials, and combinations of these active materials.

Metal-based active materials are metal-containing active materials and usually refer to active materials which include elements capable of intercalating (also referred to as doping) lithium in the structure and which have a theoretical electric capacity of 500 mAh/g or more per weight when lithium is intercalated. Although the upper limit of the theoretical electric capacity is not particularly limited, it may be, e.g., 5000 mAh/g or less. Examples of the metal-based active material for use may include a lithium metal, elementary metals capable of forming lithium alloys, and their alloys, and their oxides, sulfides, nitrides, silicides, carbides, and phosphides.

Examples of the elementary metals capable of forming lithium alloys may include elementary metals such as Ag, Al, Ba, Bi, Cu, Ga, Ge, In, Ni, P, Pb, Sb, Si, Sn, Sr, Zn, and Ti. Examples of the alloys of the elementary metals forming lithium alloys may include compounds containing the aforementioned elementary metals. Among these, silicon (Si), tin (Sn), lead (Pb), and titanium (Ti) are preferable; and silicon, tin, and titanium are more preferable. Accordingly, elementary metals of silicon (Si), tin (Sn), or titanium (Ti) or alloys including these elementary metals, or compounds of such metals are preferable.

The metal-based active materials may further include one or more nonmetallic elements. Examples of the nonmetallic element may include SiC, SiOₓC_{y} (0 < x ≤ 3, 0 < y ≤ 5), Si₃N₄, Si₂N₂O, SiOₓ (0 < x ≤ 2), SnOₓ (0 < x ≤ 2), LiSiO, and LiSnO. Among these, SiOₓ, SiC, and SiOₓC_{y} capable of intercalating and deintercalating (also referred to as dedoping) lithium at low potential are preferable. For example, SiOₓC_{y} may be obtained by firing a silicon-containing polymer material. Among SiOₓC_{y}, those in ranges of 0.8 ≤ x ≤ 3 and 2 ≤ y ≤ 4 are preferably used in consideration of the balance between the capacity and the cycle property.

Examples of the oxides, sulfides, nitrides, silicides, carbides, and phosphides of the lithium metal, the elementary metals capable of forming lithium alloys, and the alloys may include oxides, sulfides, nitrides, silicides, carbides, and phosphides of elements capable of intercalating lithium. Among them, the oxides are particularly preferable. For example, lithium-containing metal complex oxides including an oxide such as tin oxide, manganese oxide, titanium oxide, niobium oxide, and vanadium oxide, and a metal element selected from the group consisting of Si, Sn, Pb, and Ti atoms are used.

Examples of the lithium-containing metal complex oxide may further include lithium titanium complex oxides represented by LiₓTi_{y}M_{z}O₄ (0.7 ≤ x ≤ 1.5, 1.5 ≤ y ≤ 2.3, and 0 ≤ z ≤ 1.6, and M represents an element selected from the group consisting of Na, K, Co, Al, Fe, Ti, Mg, Cr, Ga, Cu, Zn, and Nb), and lithium manganese complex oxides represented by LiₓMn_{y}M_{z}O₄ (x, y, z, and M are the same as those defined in the lithium titanium complex oxides). Among them, Li_{4/3}Ti_{5/3}O₄, Li₁Ti₂O₄, Li_{4/5}Ti_{11/5}O₄, and Li_{4/3}Mn_{5/3}O₄ are preferable.

Among these, silicon-containing active materials are preferable as the metal-based active material. The use of the silicon-containing active materials can increase the electric capacity of the secondary battery.

Among the silicon-containing active materials, SiC, SiOₓ, and SiOₓC_{y} are preferable. It is deduced that, in these active materials including Si and C in combination, intercalation and deintercalation of Li to/from Si (silicon) occur at high electric potential, and intercalation and deintercalation of Li to/from C (carbon) occur at low electric potential. This reduces expansion and contraction of these active materials when compared with other metal-based active materials, to thereby improve the charging/discharging cycle property of the secondary battery.

A carbon-based active material refers to an active material having a main skeleton of carbons to which lithium can be intercalated, and examples thereof may include carbonaceous materials and graphite materials.

In general, a carbonaceous material is a carbon material with low graphitization (i.e., low crystallinity) which is obtained by carbonization of a carbon precursor by a heat treatment at 2000°C or lower. Although the lower limit of the aforementioned heat treatment is not particularly limited, it may be, e.g., 500°C or higher.

Examples of the carbonaceous material may include easily graphitizable carbons whose carbon structure can be easily changed depending on the temperature of the heat treatment, and non-easily graphitizable carbons having the structure similar to the amorphous structure represented by glassy carbon.

Examples of the easily graphitizable carbon may include carbon materials derived from tar pitch obtained from petroleum or coal. Specific examples of the easily graphitizable carbon may include coke, mesocarbon microbeads (MCMB), mesophase pitch-based carbon fibers, and pyrolysis vapor-grown carbon fibers. MCMB refer to carbon particles obtained by separation and extraction of mesophase microspheres that has been produced during the heating process of pitches at about 400°C. Mesophase pitch-based carbon fibers refer to carbon fibers derived from mesophase pitch obtained by the growth and combination of the mesophase microspheres. The pyrolysis vapor-grown carbon fibers refer to carbon fibers obtained by (1) pyrolysis of acrylic polymer fibers, etc., (2) spinning and pyrolysis of pitch, or (3) catalytic vapor growth (catalytic CVD) involving vapor phase pyrolysis of hydrocarbons using nanoparticles of, .e.g., iron as a catalyst.

Examples of the non-easily graphitizable carbon may include phenol resin fired bodies, polyacrylonitrile-based carbon fibers, quasi-isotropic carbons, furfuryl alcohol resin fired bodies (PFA), and hard carbons.

The graphite materials refer to graphite materials having high crystallinity similar to that of black lead obtained by the heat treatment of easily graphitizable carbons at 2000°C or higher. Although the upper limit of the temperature of the aforementioned heat treatment is not particularly limited, it may be, e.g., 5000°C or lower.

Examples of the graphite material may include natural graphites and artificial graphites. Examples of the artificial graphite may mainly include artificial graphites obtained by heat treatment at 2800°C or higher, graphitized MCMB obtained by heating MCMB at 2000°C or higher, and graphitized mesophase pitch-based carbon fibers obtained by heating mesophase pitch-based carbon fibers at 2000°C or higher.

Among the carbon-based active materials, the carbonaceous materials are preferable. The use of the carbonaceous materials can reduce the resistance of the secondary battery, enabling production of the secondary battery having excellent input-output property.

As the negative electrode active material, one type thereof may be solely used, or two or more types thereof may be used in combination at any ratio.

It is preferable that the negative electrode active material is prepared as those granulated in a form of particles and these are then subjected to production of composite particles. When the particles are formed in a spherical shape, formation of an electrode can give an electrode having a high density.

When the negative electrode active material is in a form of particles, the volume average particle diameter thereof is appropriately selected in consideration of the balance with other constituents of the secondary battery. The volume average particle diameter is usually 0.1 µm or more, preferably 1 µm or more, and more preferably 5 µm or more, and is usually 100 µm or less, and preferably 50 µm or less.

The particle diameter of the negative electrode active material at 50% cumulative volume is usually 1 µm or more, and preferably 15 µm or more, and is usually 50 µm or less, and preferably 30 µm or less, from the viewpoint of improvements in battery properties such as initial efficiency, load property, and cycle property. The particle diameter at 50% cumulative volume may be obtained by measuring the particle size distribution by laser diffractometry and calculating the particle diameter at 50% cumulative volume from the smaller diameter in the measured particle size distribution.

Although the tap density of the negative electrode active material is not particularly limited, it may be preferably 0.6 g/cm³ or more.

The specific surface area of the negative electrode active material is usually 2 m²/g or more, preferably 3 m²/g or more, and more preferably 5 m²/g or more, and is usually 20 m²/g or less, preferably 15 m²/g or less, and more preferably 10 m²/g or less, from the viewpoint of an improvement in power density. The specific surface area of the negative electrode active material may be measured by, e.g., the BET method.

### (1-2. Particulate polymer)

The particulate polymer includes a (meth)acrylonitrile monomer unit and an aliphatic conjugated diene monomer unit.

The (meth)acrylonitrile monomer unit is a unit obtained by polymerization of acrylonitrile and/or methacrylonitrile. The ratio of the (meth)acrylonitrile monomer unit in the particulate polymer is 10% by weight or more, and preferably 20% by weight or more, and 60% by weight or less, preferably 50% by weight or less, and more preferably 45% by weight or less. By setting the ratio of the (meth)acrylonitrile monomer unit within the aforementioned range, sufficient adhesion between the electrode active material and the current collector can be achieved, and favorable electrolyte solution resistance can be obtained.

The aliphatic conjugated diene monomer unit is a unit obtained by polymerization of an aliphatic conjugated diene monomer.

Examples of the aliphatic conjugated diene monomer may include 1,3-butadiene, 2-methyl-1,3-butadiene, 2,3-dimethyl-1,3-butadiene, 2-chloro-1,3-butadiene, substituted linear conjugated pentadienes, and substituted and side chain-conjugated hexadienes. Among these, 2-methyl-1,3-butadiene and 1,3-butadiene are preferable, and 1,3-butadiene is particularly preferable.

The monomer composition for producing the particulate polymer may include only one type of aliphatic conjugated diene monomer, or may include two or more types of aliphatic conjugated diene monomers in combination at any ratio. Therefore, the particulate polymer may include only one type of aliphatic conjugated diene monomer unit, or may include two or more types of aliphatic conjugated diene monomer units in combination at any ratio.

The ratio of the aliphatic conjugated diene monomer units in the particulate polymer is 35% by weight or more, preferably 42% by weight or more, and more preferably 48% by weight or more, and 85% by weight or less, preferably 82% by weight or less, and more preferably 76% by weight or less. By setting the ratio of the aliphatic conjugated diene monomer units within the aforementioned range, flexibility and electrolyte solution resistance of the obtained electrode can be improved, and sufficient adhesion between the electrode active material and the current collector can be obtained.

In addition to the aforementioned units, the particulate polymer may include optional units. It is particularly preferable that the particulate polymer further includes an ethylenically unsaturated carboxylic acid monomer unit in addition to the aforementioned units from the viewpoint of improved adhesion to the current collector of the electrode active material layer. The ethylenically unsaturated carboxylic acid monomer unit is a unit obtained by polymerization of an ethylenically unsaturated carboxylic acid monomer.

Examples of the ethylenically unsaturated carboxylic acid monomer may include monocarboxylic acids and dicarboxylic acids, such as acrylic acid, methacrylic acid, crotonic acid, maleic acid, fumaric acid, and itaconic acid, and anhydrides thereof. Among them, monomers selected from the group consisting of methacrylic acid, itaconic acid, and combinations thereof are preferable from the viewpoint of the adhesion of the composite particles.

The monomer composition for producing the particulate polymer may include only one type of ethylenically unsaturated carboxylic acid monomer, or may include two or more types of ethylenically unsaturated carboxylic acid monomers in combination at any ratio. Thus, the particulate polymer may include only one type of ethylenically unsaturated carboxylic acid monomer unit, or may include two or more types of ethylenically unsaturated carboxylic acid monomer units in combination at any ratio.

The ratio of the ethylenically unsaturated carboxylic acid monomer units in the particulate polymer is preferably 0.5% by weight or more, more preferably 1% by weight or more, and still more preferably 4% by weight or more, and preferably 10% by weight or less, more preferably 8% by weight or less, and still more preferably 7% by weight or less. By setting the ratio of the ethylenically unsaturated carboxylic acid monomer unit(s) within the aforementioned range, viscosity of the binder composition can be suppressed in range that is not excessively high, and stability of the binder composition can be maintained in the favorable range.

The ratio of the total of the (meth)acrylonitrile monomer unit, the aliphatic conjugated diene monomer unit(s), and the (optional) ethylenically unsaturated carboxylic acid monomer unit(s) relative to the total particulate polymer is preferably 45% by weight or more, more preferably 55% by weight or more, and still more preferably 65% by weight or more. The upper limit is not particularly limited and may be 100% by weight or less. Such a high ratio of these three types of units in this manner can provide a significantly increased bonding strength between the electrode active material layer and the current collector when compared with the case wherein a prior-art SBR binder is used.

The particulate polymer may include optional repeating units in addition to the aforementioned units as long as the effects of the present invention are not significantly impaired. Examples of the monomers corresponding to the aforementioned optional repeating units may include unsaturated carboxylic acid alkyl ester monomers, hydroxyalkyl group-containing unsaturated monomers, and unsaturated carboxylic acid amide monomers. One type thereof may be solely used, or two or more types thereof may be used in combination at any ratio.

Examples of the unsaturated carboxylic acid alkyl ester monomer may include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, and 2-ethylhexyl acrylate. Among them, methyl methacrylate is preferable. One type thereof may be solely used, or two or more types thereof may be used in combination at any ratio.

Examples of the hydroxyalkyl group-containing unsaturated monomer may include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di-(ethyleneglycol) maleate, di-(ethyleneglycol) itaconate, 2-hydroxyethyl maleate, bis(2-hydroxyethyl) maleate, and 2-hydroxyethyl methyl fumarate. Among them, β-hydroxyethyl acrylate is preferable. One type thereof may be solely used, or two or more types thereof may be used in combination at any ratio.

Examples of the unsaturated carboxylic acid amide monomer may include acrylamide, methacrylamide, N-methylolacrylamide, N-methylolmethacrylamide, and N,N-dimethylacrylamide. Among them, acrylamide and methacrylamide are preferable. One type thereof may be solely used, or two or more types thereof may be used in combination at any ratio.

The particulate polymer may further include, e.g., monomers used in ordinary emulsion polymerization, such as ethylene, propylene, vinyl acetate, vinyl propionate, vinyl chloride, and vinylidene chloride. One type thereof may be solely used, or two or more types thereof may be used in combination at any ratio.

However, in the present invention, the particulate polymer is preferably free of the units reducing the bonding strength between the electrode active material layer and the current collector, particularly aromatic vinyl monomer units, or preferably have a small content ratio of such units even if they are included. Examples of such aromatic vinyl monomers may include styrene and styrene derivatives such as α-methylstyrene and β-methylstyrene. The ratio of the aromatic vinyl monomer unit in the particulate polymer is preferably 1% by weight or less, more preferably 0.5% by weight or less, and ideally 0% by weight.

The weight average molecular weight of the particulate polymer is preferably 10000 or more, and more preferably 20000 or more, and preferably 1000000 or less, and more preferably 500000 or less. The weight average molecular weight of the particulate polymer falling within the aforementioned range easily provides favorable strength of the negative electrode of the present invention and favorable dispersibility of the negative electrode active material. The weight average molecular weight of water-insoluble polymers may be obtained as a polystyrene-based value by gel permeation chromatography (GPC) using tetrahydrofuran as a developing solvent.

The particulate polymer is usually water-insoluble particles. In the production of the composite particles, the particulate polymer is not dissolved in water which is a solvent, but dispersed as particles. That a polymer is water-insoluble means that not less than 90% by weight of the polymer remains insoluble when 0.5 g of the polymer is dissolved in 100 g of water at 25°C. That a polymer is water-soluble means that less than 0.5% by weight of the polymer remains insoluble when 0.5 g of the polymer is dissolved in 100 g of water at 25°C.

The number average particle diameter of the particulate polymer is preferably 50 nm or more, and more preferably 70 nm or more, and preferably 500 nm or less, and more preferably 400 nm or less. The number average particle diameter of the particulate polymer falling within the aforementioned range can provide favorable strength and flexibility of the negative electrode obtained. The presence of the particles may be easily determined by transmission electron microscopy, Coulter counters, laser diffraction/scattering, etc.

### (1-3. Ratio of Negative Electrode Active Material to Particulate polymer)

The content ratio of the negative electrode active material and the particulate polymer in the composite particle of the present invention is not particularly limited. The amount of the particulate polymer is usually 0.3 parts by weight or more, preferably 0.5 parts by weight or more, and particularly preferably 1 part by weight or more, and is usually 8 parts by weight or less, preferably 5 parts by weight or less, and particularly preferably 3 parts by weight or less, based on 100 parts by weight of the negative electrode active material. The ratio of the particulate polymer to the negative electrode active material falling within the aforementioned range can ensure the fluidity of the fluid particles and can provide favorable adhesion between the current collector and the active material layer.

### (1-4. Residual amount of Organic Compounds)

In the composite particle of the present invention, the residual amount of organic compounds having boiling points from 150°C to 300°C and including an unsaturated bond (for the sake of explanation, the particular organic compounds may be referred to hereinbelow as "low molecular weight organic compounds") is equal to or less than a predetermined amount.

Specifically, the low molecular weight organic compounds are those generated as by-products in the polymerization of the particulate polymer. More specifically, these low molecular weight organic compounds are products of the Diels-Alder reaction of the monomers, still more specifically dimers generated by the Diels-Alder reaction between the aliphatic conjugated diene monomer and a dienophile. Here, the dienophile is not particularly limited as long as it is a compound capable of undergoing the Diels-Alder reaction with the aliphatic conjugated diene monomer. Examples of the dienophile may include (meth)acrylonitrile monomers, ethylenically unsaturated carboxylic acid monomers, unsaturated carboxylic acid alkyl ester monomers, hydroxyalkyl group-containing unsaturated monomers, and unsaturated carboxylic acid amide monomers. As an example, the polymerization of acrylonitrile, 1,3-butadiene, and methacrylic acid produces 4-cyanocyclohexene (boiling point 260°C) that is a product of the Diels-Alder reaction between 1,3-butadiene and acrylonitrile, and also produces 4-methyl-4-carboxycyclohexene (boiling point 250°C) that is a product of the Diels-Alder reaction between 1,3-butadiene and methacrylic acid.

According to the findings by the present inventors, the use of the particulate polymer with reduced low molecular weight organic compounds can improve the durability of the electrode and as a result, can impart prominent effects of providing favorable bonding strength of the copolymer of the (meth)acrylonitrile monomer and the aliphatic conjugated diene monomer and further obtaining high resistance of the electrode at the same time.

The ratio of the low molecular weight organic compounds in the composite particle of the present invention is 500 ppm or less, and preferably 300 ppm or less as a ratio relative to the amount of the particulate polymer. That is, the residual amount of the low molecular weight organic compounds in the composite particle is 500 µg or less, and preferably 300 µg or less per one gram of the particulate polymer present in the composite particle.

The low molecular weight organic compounds are generated in the polymerization of the particulate polymer. Therefore, the residual amount of the low molecular weight organic compounds can be reduced by producing the particulate polymer with the production method that generates small amount of the low molecular weight organic compounds.

### (1-5. Method for producing Particulate polymer)

The particulate polymer with a low content ratio of the low molecular weight organic compounds are preferably produced by:
(i) a production method by low temperature polymerization, or
(ii) a production method involving removal of the low molecular weight organic compounds by steam distillation after the polymerization. The removal of the low molecular weight organic compounds by steam distillation requires a long period of time, and hence the method (i) is more preferable in terms of production efficiency and prevention of denaturation of the particulate polymer.

The low temperature polymerization in the method (i) may be any method capable of proceeding low temperature reactions in a composition including respective monomers at a predetermined ratio. Specifically, known polymerization methods such as emulsion polymerization methods, suspension polymerization methods, dispersion polymerization methods, and solution polymerization methods may be employed. Among them, production by the emulsion polymerization methods is preferable because thereby the particle diameter of the particulate polymer is easily controlled. In particular, the polymerization methods in a water system with water as a main solvent are preferable. More specifically, the emulsion polymerization may be performed by mixing monomers, a solvent, and, if needed, optional components such as an emulsifier, a molecular weight modifier, and a polymerization initiator to generate an emulsion, and allowing the emulsion to react at a low polymerization temperature.

In the emulsion polymerization, water may be usually used as a solvent.

Examples of the emulsifier may include nonionic emulsifiers, such as polyoxyethylene alkyl ethers, polyoxyethylene alkyl phenol ethers, polyoxyethylene alkyl esters, and polyoxyethylene sorbitan alkyl esters; anionic emulsifiers, such as fatty acids such as myristic acid, palmitic acid, oleic acid, and linolenic acid, and salts thereof, higher alcohol sulfuric acid esters, and alkylsulfosuccinic acids; cationic emulsifiers, such as ammonium chlorides such as trimethylammonium chloride and dialkylammonium chloride, benzyl ammonium salts, and quaternary ammonium salts; and copolymerizable emulsifiers, such as sulfo esters of α,β-unsaturated carboxylic acids, sulfate esters of α,β-unsaturated carboxylic acids, and sulfoalkyl aryl ethers. In particular, anionic emulsifiers or nonionic emulsifiers are preferably used. As the emulsifier, one type thereof may be solely used, or two or more types thereof may be used in combination at any ratio.

The using amount of these emulsifiers is preferably 1.0 part by weight to 10.0 parts by weight, and more preferably 1.5 parts by weight to 7.0 parts by weight based on 100 parts by weight of the total monomers. By setting the amount to the lower limit or more, favorable polymerization stability can be obtained, whereas, by setting the amount to the upper limit or less, residual emulsifier as an impurity in the polymer can be reduced.

Examples of the molecular weight modifier may include t-dodecyl mercaptan, and terpene-based compounds, such as terpinolene, α-pinene, β-pinene, α-terpinene, β-terpinene, γ-terpinene, and myrcene. Among them, t-dodecyl mercaptan and terpinolene are preferable in terms of reaction efficiency during the polymerization. As the molecular weight modifier, one type thereof may be solely used, or two or more types thereof may be used in combination at any ratio.

The using amount of the molecular weight modifier is preferably 0.5 parts by weight to 10 parts by weight, and more preferably 1.0 part by weight to 7.5 parts by weight based on 100 parts by weight of the total monomers. By setting the amount to the lower limit or more, the effect of the molecular weight modifier can be obtained, whereas, by setting the amount to the upper limit or less, decrease in polymerization rate can be avoided, and the Mooney viscosity of the polymer can be kept at a desired high value to improve the productivity of forming processes and thus to reduce cost.

Examples of the polymerization initiator may include organic peroxides such as 1,1,3,3-tetramethylbutyl hydroperoxide, benzoyl peroxide, cumene hydroperoxide, paramenthane hydroperoxide, lauroyl peroxide; diazo compounds, such as azobisisobutyronitrile; and redox catalysts, such as organic compound-iron sulfate combination.

The polymerization temperature in the emulsion polymerization at low temperature may be preferably 0°C to 50°C, more preferably 0°C to 30°C, still more preferably 0°C to 15°C, and particularly preferably 0°C to 10°C. The polymerization temperature falling within this range is preferable because thereby the products of the Diels-Alder reaction of the monomers are reduced. The reaction time is not particularly limited. The polymerization may be initiated by mixing monomers and other materials, and the polymerization reaction may be terminated by adding a reaction terminator when a desired polymerization conversion rate is achieved. Examples of the reaction terminator may include hydroxylammonium sulfate, hydroxyamine, and 2,5-di-t-butylhydroquinone.

By the aforementioned steps, a latex mixture containing the particulate polymer can be obtained.

The removal of the low molecular weight organic compounds by steam distillation in the method (ii) may be carried out by any process, such as known processes, for steam distillation of the reaction mixture containing the particulate polymer that has been obtained by any polymerization reaction. Steam distillation time may be set to any period of time, and the steam distillation may be continued until the concentration of the low molecular weight organic compounds reaches a desired value. The steam distillation time may be 10 hours to 15 hours.

### (1-6. Optional Components)

The composite particle of the present invention may include optional components in addition to the negative electrode active material and the particulate polymer. As such optional components, e.g., the components that have been used for producing the particulate polymer may be included as they are, as long as the effects of the present invention are not significantly impaired. The optional components may also include a water-soluble polymer having an acidic functional group. The water-soluble polymer having an acidic functional group may be prepared by polymerization of a monomer composition including an acidic functional group-containing monomer and, if needed, other optional monomers. Examples of the acidic functional group-containing monomer may include carboxyl group-containing monomers, sulfonic acid group-containing monomers, and phosphate group-containing monomers. Carboxyl group-containing monomers are particularly preferable. The ratio of the water-soluble polymer in the composite particle of the present invention may be 0.3 parts by weight to 1 part by weight with respect to 100 parts by weight of the negative electrode active material.

The optional components may also include an electroconductive material. Specific examples of the electroconductive material may include electroconductive carbon blacks, such as furnace black, acetylene black, and Ketjen black (registered trademark of Akzo Nobel Chemicals Besloten Vennootschap); black leads, such as natural graphites and artificial graphites; carbon fibers, such as polyacrylonitrile-based carbon fiber, pitch-based carbon fiber, and vapor growth carbon fiber; and carbon nanotubes. The amount of the electroconductive material is usually 0.1 parts by weight to 10 parts by weight, preferably 0.5 parts by weight to 5 parts by weight, and more preferably 1 part by weight to 5 parts by weight based on 100 parts by weight of the negative electrode active material.

The optional components may include a dispersant for dispersing respective components in a slurry prepared in the production of the composite particles. Specific examples of the dispersant may include cellulose-based polymers, such as carboxymethyl cellulose, methyl cellulose, ethyl cellulose, hydroxypropyl cellulose, and hydroxypropyl methylcellulose, and ammonium salts and alkali metal salts thereof; ammonium salts or alkali metal salts of polyacrylic acid or polymethacrylic acid; polyvinyl alcohol, modified polyvinyl alcohol, polyethylene oxide; and polyvinylpyrrolidone, polycarboxylic acid, starch oxide, starch phosphate, casein, a variety of modified starches, chitin, and chitosan derivatives. As these dispersants, one type thereof may be solely used, or two or more types thereof may be used in combination at any ratio. As the dispersant, cellulose-based polymers are preferable, and carboxymethyl cellulose, or ammonium salts or alkali metal salts thereof are particularly preferable. The using amount of the dispersant is not particularly limited, but usually 0.1 parts by weight to 5 parts by weight, preferably 0.5 parts by weight to 1 part by weight, and more preferably 0.8 parts by weight to 0.7 parts by weight based on 100 parts by weight of the negative electrode active material. Use of the dispersant can suppress sedimentation and aggregation of the solid content in the slurry.

### (1-7. Shape of Composite Particle)

It is preferable that the composite particle has a substantially spherical shape. That is, the degree of sphericity is preferably 80% or more, and more preferably 90% or more wherein the degree of sphericity (%) is the value of (1 - (Ll - Ls) / La) x 100, wherein Ls is the minor axis diameter of the composite particle, Ll is the major axis diameter, and La = (Ls + Ll) / 2. Minor axis diameter Ls and major axis diameter Ll herein are the values measured from a transmission electron microscope photographic image.

The volume average particle diameter of the composite particles is usually 10 µm or more, preferably 20 µm or more, and more preferably 30 µm or more, and is usually 100 µm or less, preferably 80 µm or less, and more preferably 60 µm or less. The volume average particle diameter may be measured using a laser diffraction type particle size distribution measuring device.

### (2. Method for Producing Composite Particles)

The composite particles of the present invention may be produced by the production method including the step of dispersing in water the negative electrode active material and a composition containing the particulate polymer to obtain a slurry composition and the step of granulating the slurry composition. This production method will be described hereinbelow as the method for producing the composite particles of the present invention.

The composite particle obtained by the method for producing the composite particle of the present invention is a particle incorporating the particulate polymer, the negative electrode active material, etc. The negative electrode active material and the particulate polymer constituting the slurry composition are not present as individual independent particles, but two or more components including the negative electrode active material and the particulate polymer form one particle. Specifically, a plurality of particles of the aforementioned two or more components are combined to form secondary particles, and preferably a plurality of (preferably several to several tens of) negative electrode active materials are bound together by the particulate polymer to form a particle. The formation of the negative electrode active material layer using the composite particles can provide the effects such as easy battery production and improvement in a variety of battery performances as a result of increased uniformity of the electrode active material layer by reduced migration.

The slurry composition may be granulated by, e.g., granulation methods, such as a spray drying granulation method, a rolling granulation method, a compression granulation method, a stirring granulation method, an extrusion granulation method, a pulverization granulation method, a fluidized bed granulation method, a fluidized bed multifunctional granulation method, a pulse combustion drying method, and a melt granulation method. The spray drying granulation method is preferable because thereby the composite particle having the particulate polymer locally distributed in the proximity of the surface can be easily obtained. Use of the composite particles obtained by the spray drying granulation method can reduce the internal resistance of the secondary battery negative electrode.

The spray drying granulation method involves spray drying the slurry composition to obtain the composite particles. The spray drying is performed by spraying the slurry composition in hot air for drying. Devices used for spraying the slurry composition may include atomizers. There are two types of atomizers: rotary disk type and pressure type. In the rotating disk system, the slurry composition is introduced to approximately the center of a high-speed rotating disk. The slurry composition is driven out of the disk by the centrifugal force of the disk, and at that time the slurry composition is atomized. The rotation speed of the disk depends on the size of the disc, but usually 5,000 rpm to 40,000 rpm, and preferably 15,000 rpm to 40,000 rpm. The slower the rotating speed of the disk is, the larger the size of the sprayed liquid droplet becomes and the larger the weight average particle diameter of the obtained composite particle becomes. Examples of the rotary disk type atomizer may include a pin type and a vane type. The pin type atomizer is preferable. The pin-type atomizer is one type of centrifugal spraying device using a spraying disk. The spraying disk is made of upper and lower mounting circular plates and a plurality of spraying rollers removably attached between the upper and lower mounting circular plates. The spraying rollers are mounted approximately along a circle that is concentric with the peripheries of the upper and lower mounting circular plates. The slurry composition is introduced through the center of the spraying disk, and adheres to the spraying rollers by the centrifugal force. The slurry composition then moves on the roller surfaces toward outside, and finally leaves the roller surfaces to be sprayed. In the pressurization system, the slurry composition is pressurized, and atomized through the nozzle to dry the composition.

The temperature of the slurry composition to be sprayed is usually room temperature, but may be heated to room temperature or higher. The hot air temperature in the spray drying is usually 80°C to 250°C, and preferably 100°C to 200°C.

In the spray drying, a hot air blowing method is not particularly limited. Examples thereof may include a system in which spray travels in parallel with hot air in a lateral direction; a system in which the slurry composition is sprayed at the top of a drying tower and travels downward together with hot air; a system in which a sprayed droplet and hot air are brought into countercurrent contact with each other; and a system in which a sprayed droplet initially flows in parallel with hot air, and then falls downward due to gravity so as to be brought into countercurrent contact.

### (3. Binder Composition)

The binder composition useful in the present invention includes the particulate polymer.
The binder composition useful in the present invention may be used as a material for producing the composite particles of the present invention.

In the binder composition,
the residual amount of the low molecular weight organic compounds is 500 ppm or less, and preferably 300 ppm or less as a ratio relative to the amount of the particulate polymer. This binder composition may be prepared by mixing the particulate polymer obtained by the aforementioned production methods (i) and (ii), and other materials free of the low molecular weight organic compounds.

The binder composition
may include optional components in addition to the particulate polymer. For example, the components that have been used for producing the particulate polymer may be included as they are, as long as the effects of the present invention are not significantly impaired.

### (4. Secondary battery negative electrode material)

The secondary battery negative electrode material of the present invention includes the secondary battery negative electrode composite particle of the present invention.

The secondary battery negative electrode material may include optional components in addition to the secondary battery negative electrode composite particle, but usually may include only the secondary battery negative electrode composite particle of the present invention.

### (5. Secondary battery negative electrode)

The secondary battery negative electrode of the present invention includes a current collector, and an active material layer provided on the current collector and formed from the secondary battery negative electrode material of the present invention.

The material of the current collector is not particularly limited as long as the material has electroconductivity and electrochemical durability, but a metal material is preferable because of its thermal resistance. Examples of the material of the current collector for the negative electrode may include iron, copper, aluminum, nickel, stainless steel, titanium, tantalum, gold, and platinum. Among these, copper is particularly preferable as the current collector for the secondary battery negative electrode. As the aforementioned material, one type thereof may be solely used, or two or more types thereof may be used in combination at any ratio.

The shape of the current collector is not particularly limited, but it is preferably in a sheet shape having a thickness of about 0.001 mm to 0.5 mm.

The current collector is preferably subjected to a surface roughening treatment in advance of use for increasing bonding strength to the negative electrode active material layer. Examples of the surface roughening method may include mechanical polishing, electrolytic polishing, and chemical polishing. In the mechanical polishing, a coated abrasive to which abrasive particles adhere, a grinding stone, an emery wheel, a wire brush provided with steel wires, etc. are used. For increasing the bonding strength and electroconductivity of the negative electrode active material layer, an intermediate layer may be formed on the surface of the current collector.

The active material layer is preferably formed by pressure molding of the secondary battery negative electrode material. The pressure molding is preferably roll pressure molding. More specifically, the secondary battery negative electrode material is supplied onto the current collector to form a layer of the secondary battery negative electrode material. The layer is then pressed by a roll, etc. to form an active material layer.

The feeder used in the step of supplying the composite particles onto the current collector is not particularly limited, but a quantitative feeder capable of quantitatively supplying the composite particles is preferable. The quantitatively supplying herein means that the CV value (= σm/m x 100) is 4 or less where m is the average of the measured value and σm is the standard deviation when the composite particles are continuously supplied using such a feeder and the supplied amount is measured a plurality of times at a regular interval. The quantitative feeder suitably used for producing the secondary battery negative electrode of the present invention preferably has the CV value of 2 or less. Specific examples of the quantitative feeder may include gravity feeders such as table feeders and rotary feeders, and mechanical feeders such as screw feeders and belt feeders. Among these, rotary feeders are preferable.

Subsequent pressing may be carried out by pressing the current collector and the layer of the supplied composite particle with a pair of rolls. In this step, with the pair of rolls, the composite particles which are optionally heated are formed into a sheet-shaped negative electrode active material layer. The temperature of the composite particles supplied is preferably 40°C to 160°C, more preferably 70°C to 140°C. When the composite particles that are heated in this temperature range are used, the composite particles do not slip on the surface of the press rolls and are continuously and uniformly supplied to the press rolls. It is thereby possible to obtain a negative electrode active material layer with uniform film thickness and small deviation in the electrode density.

The temperature for forming is usually 25°C or higher, preferably 50°C or higher, and more preferably 80°C or higher, and 200°C or lower, preferably 150°C or lower, and more preferably 120°C or lower. The temperature for forming is preferably higher than the melting point or the glass transition temperature of the particulate polymer used in the present invention, and is more preferably higher than the melting point or the glass transition temperature by 20°C or more. The forming speed in using the rolls is usually higher than 0.1 m/min, and preferably 35 m/min to 70 m/min. The press linear pressure between the pressing rolls is usually 10 kN/m or more, preferably 200 kN/m or more, and more preferably 300 kN/m or more, and is usually 1000 kN/m or less, preferably 900 kN/m or less, and more preferably 600 kN/m or less.

In the aforementioned production method, the arrangement of the pair of rolls is not particularly limited, but the pair of rolls is preferably arranged approximately horizontally or approximately vertically. In the case of the approximately horizontal arrangement, the current collector is continuously supplied between the pair of rolls, and the composite particles are supplied to at least one of the rolls. The composite particles are accordingly supplied to the gap between the current collector and the roll, and the negative electrode active material layer may be formed by the pressing. In the case of the approximately vertical arrangement, the current collector is conveyed horizontally, the composite particles are supplied onto the current collector, and the supplied composite particles are optionally leveled with a blade, etc., if needed. The current collector is then supplied between the pair of rolls, and the negative electrode active material layer may be formed by the pressing.

### (6. Secondary battery)

The secondary battery of the present invention includes the negative electrode of the present invention. The secondary battery of the present invention usually includes a positive electrode, a negative electrode, an electrolyte solution, and a separator, wherein the negative electrode is the negative electrode of the present invention.

### (6-1. Positive Electrode)

The positive electrode usually includes a current collector and a positive electrode active material layer formed on the surface of the current collector, wherein the layer contains a positive electrode active material and a positive electrode binder. Alternatively, metal may be used as a positive electrode active material which may also serve as a current collector.

The current collector of the positive electrode is not particularly limited as long as it is a material having electroconductivity and electrochemical durability. For example, the current collector used in the negative electrode of the present invention may be used as the current collector of the positive electrode. In particular, aluminum is preferable.

As the positive electrode active material, materials capable of intercalating and deintercalating lithium ions may be used when, e.g., the secondary battery of the present invention is a lithium-ion secondary battery. Such positive electrode active materials are roughly classified into materials of inorganic compounds and materials of organic compounds.

Examples of the positive electrode active materials of inorganic compounds may include transition metal oxides, transition metal sulfides, and lithium-containing complex metal oxides of lithium and transition metals.

Examples of the transition metals may include Ti, V, Cr, Mn, Fe, Co, Ni, Cu, and Mo.

Examples of the transition metal oxides may include MnO, MnO₂, V₂O₅, V₆O₁₃, TiO₂, Cu₂V₂O₃, amorphous V₂OP₂O₅, MoO₃, V₂O₅, and V₆O₁₃. Among these, MnO, V₂O₅, V₆O₁₃. and TiO₂ are preferable in terms of cycle stability and capacity.

Examples of the transition metal sulfides may include TiS₂, TiS₃, amorphous MoS₂, and FeS.

Examples of the lithium-containing complex metal oxides may include lithium-containing complex metal oxides having a layered structure, lithium-containing complex metal oxides having a spinel structure, and lithium-containing complex metal oxides having an olivine structure.

Examples of the lithium-containing complex metal oxide having a layered structure may include a lithium-containing cobalt oxide (LiCoO₂), a lithium-containing nickel oxide (LiNiO₂), lithium complex oxides of Co-Ni-Mn, lithium complex oxides of Ni-Mn-Al, and lithium complex oxides of Ni-Co-Al.

Examples of the lithium-containing complex metal oxides having a spinel structure may include lithium manganate (LiMn₂O₄), and Li[Mn_{3/2}M_{1/2}]O₄ (where M represents Cr, Fe, Co, Ni, Cu, etc.) with some Mn being substituted with other transition metals.

Examples of the lithium-containing complex metal oxides having an olivine structure may include olivine-type lithium phosphate compounds represented by LiₓMPO₄ (where M represents at least one element selected from the group consisting of Mn, Fe, Co, Ni, Cu, Mg, Zn, V, Ca, Sr, Ba, Ti, Al, Si, B, and Mo, and X represents the number satisfying 0 ≤ X ≤ 2).

Examples of the positive electrode active materials of organic compounds may include electroconductive polymer compounds such as polyacetylene and poly-p-phenylene.

Positive electrode active materials of composite materials having inorganic compounds and organic compounds in combination may also be used. For example, an iron-based oxide is subjected to reduction firing in the presence of a carbon source material to produce a composite material covered with the carbon material, and this composite material may be used as the positive electrode active material. Although iron-based oxides tend to have low electroconductivity, by formulating the iron-based oxides to be the composite material as described above, the material may be used as the positive electrode active material having high performance.

Further, materials obtained by partial element substitution of the aforementioned compounds may also be used as the positive electrode active material. Mixtures of the aforementioned inorganic compounds and organic compounds may also be used as the positive electrode active material.

As the positive electrode active material, one type thereof may be solely used, or two or more types thereof may be used in combination at any ratio.

The average particle diameter of the positive electrode active material particles is usually 1 µm or more, and preferably 2 µm or more, and is usually 50 µm or less, and preferably 30 µm or less. The average particle diameter of the positive electrode active material particles falling within the aforementioned range can reduce the amount of the binder in the preparation of the positive electrode active material layer, and can prevent a decrease in the capacity of the secondary battery. In addition, a positive electrode slurry composition containing the positive electrode active material and the binder is usually prepared to form the positive electrode active material layer. By setting the diameter in the aforementioned range, the viscosity of this positive electrode slurry composition can be easily adjusted to a proper viscosity for easy application to provide a uniform positive electrode.

The content ratio of the positive electrode active material in the positive electrode active material layer is preferably 90% by weight or more, and more preferably 95% by weight or more, and preferably 99.9% by weight or less, and more preferably 99% by weight or less. The content of the positive electrode active material falling within the aforementioned range can increase the capacity of the secondary battery and can also improve the flexibility of the positive electrode and the binding property between the current collector and the positive electrode active material layer.

Examples of the positive electrode binder may include resins, such as polyethylene, polytetrafluoroethylene (PTFE), polyvinylidene fluoride (PVDF), tetrafluoroethylene-hexafluoropropylene copolymers (FEP), polyacrylic acid derivatives, and polyacrylonitrile derivatives; and soft polymers, such as acrylic soft polymers, diene-based soft polymers, olefin-based soft polymers, and vinyl-based soft polymers. As the binder, one type thereof may be solely used, or two or more types thereof may be used in combination at any ratio.

The positive electrode active material layer may optionally include other components than the positive electrode active material and the binder, if needed. Examples of other components may include viscosity modifiers, electroconductive agents, reinforcing materials, leveling agents, and electrolyte additives. As these components, one type thereof may be solely used, or two or more types thereof may be used in combination at any ratio.

The thickness of the positive electrode active material layer is usually 5 µm or more, and preferably 10 µm or more, and is usually 300 µm or less, and preferably 250 µm or less. The thickness of the positive electrode active material layer falling within the aforementioned range can realize both high load property and high energy density.

The positive electrode may be produced by, e.g., the same method as for the negative electrode described above.

### (6-2. Electrolyte Solution)

As the electrolyte solution, e.g., a solution of a lithium salt as a supporting electrolyte in a non-aqueous solvent may be used. Examples of the lithium salt may include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. LiPF₆, LiClO₄, and CF₃SO₃Li are preferably used because they are easily dissolved in solvents and show particularly high degree of dissociation. One type thereof may be solely used, or two or more types thereof may be used in combination at any ratio.

The amount of the supporting electrolyte is usually 1% by weight or more, and preferably 5% by weight or more, and is usually 30% by weight or less, and preferably 20% by weight or less with respect to the electrolyte solution. If the amount of the supporting electrolyte is too small or too large, the ionic conductivity may decrease to deteriorate the charging and discharging property of the secondary battery.

The solvent used for the electrolyte solution is not particularly limited as long as it dissolves the supporting electrolyte. Examples of the solvent for use may include alkyl carbonates, such as dimethyl carbonate (DMC), ethylene carbonate (EC), diethyl carbonate (DEC), propylene carbonate (PC), butylene carbonate (BC), and methyl ethyl carbonate (MEC); esters, such as γ-butyrolactone and methyl formate; ethers, such as 1,2-dimethoxyethane and tetrahydrofuran; and sulphur-containing compounds, such as sulfolane and dimethyl sulfoxide. Dimethyl carbonate, ethylene carbonate, propylene carbonate, diethyl carbonate, and methyl ethyl carbonate are preferable because therewith particularly high ion conductivity can be easily obtained, and these compounds can be used in a wide temperature range. As the solvent, one type thereof may be solely used, or two or more types thereof may be used in combination at any ratio.

The electrolyte solution may optionally contain an additive(s), if needed. As the additive, e.g., carbonate compounds such as vinylene carbonate (VC) are preferable. As the additive, one type thereof may be solely used, or two or more types thereof may be used in combination at any ratio.

In addition to the aforementioned electrolyte solutions, examples of the electrolyte solutions may include gel polymer electrolytes obtained by impregnating polymer electrolytes, such as polyethylene oxide and polyacrylonitrile, with the electrolyte solution; and inorganic solid electrolytes, such as lithium sulfide, LiI, and Li₃N.

### (6-3. Separator)

As the separator, porous substrate having pores are usually used. Examples of the separator may include (a) porous separators having pores, (b) porous separators having a polymer coat layer(s) formed on one side or both sides, and (c) porous separators having a porous resin coat layer containing inorganic ceramic powders. Examples of these may include polypropylene-based, polyethylene-based, polyolefin-based, and aramid-based porous separators, polymer films for solid polymer electrolytes or gel polymer electrolytes, such as polyvinylidene fluoride, polyethylene oxide, polyacrylonitrile, and a polyvinylidene fluoride-hexafluoropropylene copolymer; separators coated with a gelated polymer coat layer; and separators coated with a porous membrane layer including an inorganic filler and a dispersant for the inorganic filler.

### (6-4. Method for Producing Secondary battery)

The method for producing the secondary battery of the present invention is not particularly limited. For example, the battery may be formed by stacking the aforementioned positive and negative electrodes with the separator being interposed therebetween, then optionally rolling or bending the stacked layers in conformity with the battery shape, putting them into a battery container, and pouring an electrolyte solution into the battery container, followed by sealing. Furthermore, expanded metal; an overcurrent protection element such as a fuse and a PTC element; a lead plate, etc., if needed, may be installed in the battery to prevent a pressure increase inside the battery and overcharging/overdischarging. The battery shape may be any of, e.g., laminate cell type, coin type, button type, sheet type, cylindrical type, square type, and flat type.

### [Examples]

The present invention will be described hereinbelow in detail by way of Examples. However, the present invention is not limited to the following Examples and may be implemented with any modification without departing from the scope of the claims and equivalents thereto.

Unless otherwise specified, "%" and "part" expressing the amount in the following description are based on the weight. In addition, unless otherwise specified, the procedures explained in the following were carried out under the conditions of normal temperature and normal pressure.

In Examples and Comparative Examples, the physical properties and performance of the batteries and the materials were evaluated as follows.

### [Measurement of Residual amount of Low Molecular Weight Organic Compounds in Binder Composition and Composite Particles]

1 g of the composite particles were weighted and left to stand in 25 ml of DMF (dimethylformamide) in a sealed container for 24 hour. Using this as a test sample, gas chromatography with a gas chromatography apparatus manufactured by Shimadzu Corporation (trade name "Gas Chromatograph GC-14A," column: capillary column, carrier gas: helium) was performed. The detected peaks were analyzed and assigned to the compounds in the composite particles. Using the calibration curve produced with an organic compound of known concentration, the amount of the residual low molecular weight organic compounds in the composite particles was calculated from the obtained gas chromatograph as the ratio (ppm) relative to the amount of the particulate polymer.

The residual amount of the low molecular weight organic compounds in the binder composition was measured in the same manner as the method for measuring the residual amount of the low molecular weight organic compounds in the composite particles, except that the binder composition was used in place of the composite particles.

### [Peel Strength]

A test piece of the negative electrode was fixed with the negative electrode active material layer-side surface facing upward. A cellophane tape was attached to the negative electrode active material layer-side surface of the test piece. The cellophane tape was then peeled off from one end of the test piece in the direction of 180° at a speed of 50 mm/min, and the stress at that time was measured. The measurement was repeated 10 times and the average was calculated as the peel strength, which was evaluated in accordance with the following criteria. Larger value is indicative of high adhesion strength of the negative electrode.
A: 10 N/m or more
B: less than 10 N/m, and 5 N/m or more
C: less than 5 N/m, and 1 N/m or more
D: less than 1 N/m

[Initial Capacity]

Under 25°C environment, the half-cell secondary batteries obtained in Examples and Comparative Examples were discharged to 0.02 V by the constant current method at a discharging rate of 0.1 C, and then charged to 1.5 V at a charging rate of 0.1 C to measure the battery capacity at 0.1 C charging. From the measured battery capacity, the capacity per unit weight of the negative electrode active material layer was calculated as the initial capacity. The initial capacity was evaluated in accordance with the following criteria. Larger initial capacity is preferable because that realizes high battery capacity of the secondary battery.
A: 380 mAh/g or more
B: less than 380 mAh/g

### [Resistance]

Under 25°C environment, the full-cell secondary batteries obtained in Examples and Comparative Examples were left to stand for 24 hours, and then charged and discharged to/from 4.2 V at a charging/discharging rate of 0.1 C. The charging and discharging were then carried out under -30°C environment and the voltage (ΔV) at 10 seconds after the onset of discharging was measured. Smaller value is indicative of small internal resistance that enables high-speed charging/discharging.
A: less than 0.2 V
B: 0.2 V or more, and less than 0.3 V
C: 0.3 V or more, and less than 0.5 V
D: 0.5 V or more, and less than 0.7 V
E: 0.7 V or more

### [High Temperature Cycle Property]

The full-cell secondary batteries obtained in Examples and Comparative Examples were subjected to 200 cycles of charging and discharging, wherein charging was performed to 4.3 V by the constant current method at 0.1 C and then discharging was performed to 3.0 V at 0.1 C. The capacity maintenance rate (%) that is the capacity at the 200th time relative to the initial capacity was calculated, and evaluated in accordance with the following evaluation criteria for high temperature cycle property. Higher value is indicative of better high temperature cycle property. All measurements for high temperature cycle property were carried out under temperature 60°C environment.
A: 95% or more
B: less than 95%, and 85% or more
C: less than 85%, and 75% or more
D: less than 75%, and 60% or more
E: less than 60%

### [High Temperature Storage Property]

Under 25°C environment, the full-cell secondary batteries obtained in Examples and Comparative Examples were left to stand for 24 hours, and then charged and discharged to/from 4.2 V at a charging/discharging rate of 0.1 C, to measure initial capacity C₀. The batteries were then charged to 4.2 V under 60°C environment and stored at 60°C for 7 days. Subsequently, the batteries were charged and discharged to/from 4.2 V at a charging/discharging rate of 0.1 C under 25°C environment, to measure capacity C₁ after high temperature storage. The capacity change rate represented by ΔC = C₁/C₀ x 100 (%) was calculated and evaluated in accordance with the following evaluation criteria for high temperature storage property. Higher value is indicative of better high-temperature storage property.
A: 85% or more
B: 70% or more, and less than 85%
C: 60% or more, and less than 70%
D: 50% or more, and less than 60%
E: less than 50%

### <Example 1>

### (1-1. Production of Water-Insoluble Binder (A1), Low-Temperature Polymerization)

To a reaction vessel inner air of which had been replaced with nitrogen gas, 71 parts of 1,3-butadiene, 22 parts of acrylonitrile, 7 parts of methacrylic acid, 0.3 parts of a molecular weight modifier (TDM: t-dodecyl mercaptan), 0.1 parts of a polymerization initiator (TBM: 1,1,3,3-tetramethylbutyl hydroperoxide) and 0.008 parts of ferrous sulfate, and 120 parts of soft water and 6 parts of an emulsifier (Walorate u: product of Toshin Kagaku Co., Ltd.) were placed, and the mixture was maintained at 8°C to initiate polymerization.

When the polymerization conversion rate reached 90%, 0.2 parts of hydroxylammonium sulfate was added per 100 parts by weight of the produced copolymer to terminate the polymerization reaction, to thus obtain a copolymer-containing mixture. After removing unreacted monomers from the obtained copolymer-containing mixture, water and a 5% sodium hydroxide aqueous solution were added to the copolymer-containing mixture to obtain a copolymer particle aqueous dispersion having a solid content concentration of 40% and a pH of 8. This mixture as it was was subjected to the following step as water-insoluble binder composition (A1). The solid content (copolymer content) in water-insoluble binder composition (A1) was 40%. The residual amount of the organic compounds in water-insoluble binder composition (A1) was measured. The results are shown in Table 1.

### (1-2. Production of Secondary Battery Negative Electrode Composite Particles)

5 parts of SiOC (volume average particle diameter: 12 µm) as a negative electrode active material, 95 parts of artificial graphite (volume average particle diameter: 24.5 µm, distance between graphite layers (spacing between (002) planes by X-ray diffraction (d-value)): 0.354 nm), 0.7 parts (solid content basis) of 1.5% aqueous solution of carboxymethyl cellulose, and 3.0 parts (solid content basis) of water-insoluble binder composition (A1) obtained in the aforementioned step (1-1) were mixed. To the mixture, ion-exchanged water was further added so that solid content concentration was 35%, and mixed to obtain a slurry in which respective components were dispersed. This slurry was subjected to spray drying granulation using a spray dryer (produced by Ohkawara Kakohki Co., Ltd.) and a rotary disk type atomizer (diameter 65 mm) at a rotational frequency of 25,000 rpm, a hot air temperature of 150°C, and a particle recovery outlet temperature of 90°C to obtain composite particles. These composite particles had a volume average particle diameter of 40 µm.

The residual amount of the organic compounds in the obtained composite particles was measured. The results are shown in Table 1.

### (1-3. Production of Negative Electrode)

The composite particles obtained in the aforementioned step (1-2) was deposited on a copper foil having a thickness of 20 µm, which was then supplied to a roll (roll temperature 100°C, press linear pressure 500 kN/m) of a roll press machine (press-cutting rough surface hot roll, produced by Hirano Giken Kogyo Co., Ltd.) and formed into a sheet shape at a forming speed of 20 m/min to form an active material layer having a thickness of 80 µm, thereby obtaining a secondary battery negative electrode.

A test piece was cut out of the obtained negative electrode and the peel strength was measured with the piece. The results are shown in Table 1.

### (1-4. Production of Secondary battery: Half-Cell for Initial Capacity Measurement)

The sheet-shaped negative electrode obtained in step (1-3) was cut out into a disk shape having a diameter of 12 mm. A monolayer polypropylene separator (thickness 25 µm, produced by the dry method, porosity 55%) was cut out into a disk shape having a diameter of 19 mm. A sheet-shaped metal lithium having a thickness of 500 µm was punched out into a disk shape having a diameter of 14 mm to give a disk-shaped positive electrode. The disk-shaped negative electrode, the disk-shaped separator, and the disk-shaped positive electrode were stacked in this order. In the stack of the layers, the disk-shaped negative electrode was disposed in a direction so that the negative electrode active material layer-side surface was in contact with the separator. Further, expanded metal was disposed on the disk-shaped positive electrode.

The layered electrodes, separator, and expanded metal were installed in a coin-type outer container of stainless steel (diameter 20 mm, height 1.8 mm, stainless steel thickness 0.25 mm) equipped with a polypropylene gasket so that the negative electrode was in contact with the bottom of the outer container. An electrolyte solution was poured into this container so that no air remained therein. The outer container was covered with a stainless steel cap having a thickness of 0.2 mm with a polypropylene gasket being interposed therebetween, and fastened to seal a battery can, thereby producing a half-cell secondary battery for initial capacity measurement which had a diameter of 20 mm and a thickness of about 2 mm. As the electrolytic solution, a 1 mol/L solution of LiPF₆ in a mixed solvent of ethylene carbonate (EC) and diethyl carbonate (DEC) at EC:DEC = 1:2 (volume ratio at 20°C) was used.

The initial capacity of the obtained battery was measured. The results are shown in Table 1.

### (1-5. Production of Electrode Composition for Positive Electrode and Positive Electrode)

To 95 parts of LiCoO₂ having a spinel structure as a positive electrode active material, 3 parts based on the solid content of PVDF (polyvinylidene fluoride) as a binder were added. 2 parts of acetylene black and 20 parts of N-methylpyrrolidone were further added thereto and mixed with a planetary mixer to form a slurry, to thus obtain a positive electrode slurry composition. This positive electrode slurry composition was applied onto an aluminum foil having a thickness of 18 µm to form a layer having a thickness of 80 µm, and dried at 120°C for 30 minutes, followed by roll press to form an active material layer having a thickness of 60 µm, to thus obtain a positive electrode.

### (1-6. Preparation of Separator)

A monolayer polypropylene separator (thickness 25 µm, produced by the dry method, porosity 55%) was cut out into a square of 5 x 5 cm².

### (1-7. Production of Secondary battery: Full-Cell)

An outer package of aluminum packaging material was prepared as a battery outer package. The positive electrode obtained in the aforementioned (1-5) was cut into a square of 4 x 4 cm², and disposed so that the current collector-side surface was in contact with the outer package of aluminum packaging material. The square separator obtained in the aforementioned (1-6) was disposed on the surface of the positive electrode active material layer side of the positive electrode. Further, the negative electrode obtained in the aforementioned (1-3) was cut out into a square of 4.2 x 4.2 cm², and this was then disposed on the separator so that the negative electrode active material layer-side surface faced the separator. An electrolyte solution (solvent: EC/DEC = 1/2, electrolyte: 1M of LiPF₆) was poured so that no air remained. Further, for sealing the opening of the aluminum packaging material, the opening of the aluminum outer package was sealed by heating at 150°C, to thus produce a lithium-ion secondary battery.

### <Example 2>

### (2-1. Production of Water-Insoluble Binder (A2), Low-Temperature Polymerization)

Water-insoluble binder composition (A2) was obtained in the same manner as in step (1-1) of Example 1 except that the amount of acrylonitrile was changed to 10 parts and the amount of 1,3-butadiene was changed to 83 parts, and the residual amount of the organic compounds was then measured. The results are shown in Table 1.

### (2-2. Production of Secondary battery)

Battery components and a battery were produced and evaluated in the same manner as in steps (1-2) to (1-6) of Example 1 except that water-insoluble binder composition (A2) obtained in the aforementioned step (2-1) was used in place of water-insoluble binder composition (A1) obtained in step (1-1). The results are shown in Table 1.

### <Example 3>

### (3-1. Production of Water-Insoluble Binder (A3), Low-Temperature Polymerization)

Water-insoluble binder composition (A3) was obtained in the same manner as in step (1-1) of Example 1 except that the amount of acrylonitrile was changed to 55 parts and the amount of 1,3-butadiene was changed to 38 parts, and the residual amount of the organic compounds was then measured. The results are shown in Table 1.

### (3-2. Production of Secondary battery)

Battery components and a battery were produced and evaluated in the same manner as in steps (1-2) to (1-6) of Example 1 except that water-insoluble binder composition (A3) obtained in the aforementioned step (3-1) was used in place of water-insoluble binder composition (A1) obtained in step (1-1). The results are shown in Table 1.

### <Example 4>

### (4-1. Production of Water-Insoluble Binder (A1b), Moderate-Temperature Polymerization)

Water-insoluble binder composition (A1b) was obtained in the same manner as in step (1-1) of Example 1 except that the temperature of emulsion polymerization was set not to 8°C but to 30°C, and the residual amount of the organic compounds was then measured. The results are shown in Table 1.

### (4-2. Production of Secondary battery)

Battery components and a battery were produced and evaluated in the same manner as in steps (1-2) to (1-6) of Example 1 except that water-insoluble binder composition (A1b) obtained in the aforementioned step (4-1) was used in place of water-insoluble binder composition (A1) obtained in step (1-1). The results are shown in Table 1.

### <Example 5>

### (5-1. Production of Water-Insoluble Binder (A1c), Moderate-Temperature Polymerization)

Water-insoluble binder composition (A1c was obtained in the same manner as in step (1-1) of Example 1 except that the temperature of emulsion polymerization was set not to 8°C but to 55°C, and the residual amount of the organic compounds was then measured. The results are shown in Table 1.

### (5-2. Production of Secondary battery)

Battery components and a battery were produced and evaluated in the same manner as in steps (1-2) to (1-6) of Example 1 except that water-insoluble binder composition (A1c) obtained in the aforementioned step (5-1) was used in place of water-insoluble binder composition (A1) obtained in step (1-1). The results are shown in Table 1.

### <Example 6>

### (6-1. Production of Water-Insoluble Binder (A4), Low-Temperature Polymerization)

Water-insoluble binder composition (A4) was obtained in the same manner as in step (1-1) of Example 1 except that 7 parts of itaconic acid was used in place of 7 parts of methacrylic acid, and the residual amount of the organic compounds was then measured. The results are shown in Table 1.

### (6-2. Production of Secondary battery)

Battery components and a battery were produced and evaluated in the same manner as in steps (1-2) to (1-6) of Example 1 except that water-insoluble binder composition (A4) obtained in the aforementioned step (6-1) was used in place of water-insoluble binder composition (A1) obtained in step (1-1). The results are shown in Table 1.

### <Example 7>

### (7-1. Production of Water-Insoluble Binder (A5), Low-Temperature Polymerization)

Water-insoluble binder composition (A5) was obtained in the same manner as in step (1-1) of Example 1 except that the monomer composition of 22 parts of acrylonitrile, 71 parts of 1,3-butadiene, and 7 parts of methacrylic acid was changed to 24 parts of acrylonitrile, 36 parts of 1,3-butadiene, and 40 parts of 2-hydroxyethyl acrylate, and the residual amount of the organic compounds was then measured. The results are shown in Table 2.

### (7-2. Production of Secondary battery)

Battery components and a battery were produced and evaluated in the same manner as in steps (1-2) to (1-6) of Example 1 except that water-insoluble binder composition (A5) obtained in the aforementioned step (7-1) was used in place of water-insoluble binder composition (A1) obtained in step (1-1). The results are shown in Table 2.

### <Example 8>

Battery components and a battery were produced and evaluated in the same manner as in Example 1 except that SiOC was not used and the ratio of artificial graphite was 100 parts in step (1-2). The results are shown in Table 2.

### <Example 9>

### (9-1. Production of Water-Insoluble Binder (A1d), High-Temperature Polymerization)

To a polymerization reaction vessel inner air of which had been replaced with nitrogen gas, 22 parts of acrylonitrile, 71 parts of 1,3-butadiene, 7 parts of methacrylic acid, 0.2 parts of t-dodecyl mercaptan (TDM), 132 parts of soft water, 3.0 parts of sodium dodecylbenzenesulfonate, 0.5 parts of β-naphthalenesulfonic acid formalin condensate sodium salt, 0.3 parts of potassium persulfate, and 0.05 parts of ethylenediaminetetraacetic acid sodium salt were placed and allowed to react by keeping the polymerization temperature at 80°C until the polymerization conversion rate reached 98%. When the conversion rate reached 98%, 0.1 parts of sodium dimethyldithiocarbamate was added as a polymerization terminator for terminating the polymerization reaction, to thus obtain a copolymer-containing reaction mixture.

Subsequently, the reaction mixture was adjusted to a pH of 8, and steam distillation was performed at 90°C for 15 hours to remove unreacted monomers and other low boiling point compounds. To the mixture after the completion of the steam distillation, water and a 5% sodium hydroxide aqueous solution were added to obtain a copolymer particle aqueous dispersion having a solid content concentration of 40% and a pH of 8. This dispersion as it was was subjected to the following step as water-insoluble binder composition (A1d). The residual amount of the organic compounds in water-insoluble binder composition (A1d) was measured. The results are shown in Table 2.

### (9-2. Production of Secondary battery)

Battery components and a battery were produced and evaluated in the same manner as in steps (1-2) to (1-6) of Example 1 except that water-insoluble binder composition (A1d) obtained in the aforementioned step (9-1) was used in place of water-insoluble binder composition (A1) obtained in step (1-1). The results are shown in Table 2.

### <Example 10>

### (10-1. Production of Water-Insoluble Binder (A8), Low-Temperature Polymerization)

Water-insoluble binder composition (A8) was obtained in the same manner as in step (1-1) of Example 1 except that the amount of acrylonitrile was changed to 24 parts, the amount of 1,3-butadiene was changed to 72 parts, and the amount of methacrylic acid was changed to 4 parts. The residual amount of the organic compounds was then measured. The results are shown in Table 2.

### (10-2. Production of Secondary battery)

Battery components and a battery were produced and evaluated in the same manner as in steps (1-2) to (1-6) of Example 1 except that water-insoluble binder composition (A8) obtained in the aforementioned step (10-1) was used in place of water-insoluble binder composition (A1) obtained in step (1-1). The results are shown in Table 2.

### <Example 11>

### (11-1. Production of Water-Insoluble Binder (A9), Low-Temperature Polymerization)

Water-insoluble binder composition (A9) was obtained in the same manner as in step (1-1) of Example 1 except that the amount of acrylonitrile was changed to 27 parts, the amount of 1,3-butadiene was changed to 72 parts, and the amount of methacrylic acid was changed to 1 part. The residual amount of the organic compounds was then measured. The results are shown in Table 2.

### (11-2. Production of Secondary battery)

Battery components and a battery were produced and evaluated in the same manner as in steps (1-2) to (1-6) of Example 1 except that water-insoluble binder composition (A9) obtained in the aforementioned step (11-1) was used in place of water-insoluble binder composition (A1) obtained in step (1-1). The results are shown in Table 2.

### <Comparative Example 1>

### (Cp1-1. Production of Water-Insoluble Binder (A6), High-Temperature Polymerization)

To a polymerization reaction vessel inner air of which had been replaced with nitrogen gas, 6 parts of acrylonitrile, 35 parts of 1,3-butadiene, 6 parts of methacrylic acid, 53 parts of styrene, 0.2 parts of t-dodecyl mercaptan (TDM), 132 parts of soft water, 3.0 parts of sodium dodecylbenzenesulfonate, 0.5 parts of β-naphthalenesulfonic acid formalin condensate sodium salt, 0.3 parts of potassium persulfate, and 0.05 parts of ethylenediaminetetraacetic acid sodium salt were placed and allowed to react by keeping the polymerization temperature at 80°C until the polymerization conversion rate reached 98%. When the conversion rate reached 98%, 0.1 parts of sodium dimethyldithiocarbamate was added as a polymerization terminator for terminating the polymerization reaction, to thus obtain a copolymer-containing reaction mixture.

After removing unreacted monomers from the obtained copolymer-containing mixture, water and a 5% sodium hydroxide aqueous solution were added to obtain a copolymer particle aqueous dispersion having a solid content concentration of 40% and a pH of 8. This mixture as it was was subjected to the following step as water-insoluble binder composition (A6). The residual amount of the organic compounds in water-insoluble binder composition (A6) was then measured. The results are shown in Table 3.

### (Cp1-2. Production of Secondary battery)

Battery components and a battery were produced and evaluated in the same manner as in steps (1-2) to (1-6) of Example 1 except that water-insoluble binder composition (A6) obtained in the aforementioned step (Cp1-1) was used in place of water-insoluble binder composition (A1) obtained in step (1-1). The results are shown in Table 3.

### <Comparative Example 2>

### (Cp2-1. Production of Water-Insoluble Binder (A7), High-Temperature Polymerization)

Water-insoluble binder composition (A7) was obtained in the same manner as in step (Cp1-1) of Comparative Example 1 except that the monomer composition of 6 parts of acrylonitrile, 35 parts of 1,3-butadiene, 6 parts of methacrylic acid, and 53 parts of styrene was changed to 10 parts of acrylonitrile, 86 parts of 2-hydroxyethyl acrylate, and 4 parts of methacrylic acid. The residual amount of the organic compounds was then measured. The results are shown in Table 3.

### (Cp2-2. Production of Secondary battery)

Battery components and a battery were produced and evaluated in the same manner as in steps (1-2) to (1-6) of Example 1 except that water-insoluble binder composition (A7) obtained in the aforementioned step (Cp2-1) was used in place of water-insoluble binder composition (A1) obtained in step (1-1). The results are shown in Table 3.

### <Comparative Example 3>

### (Cp3-1. Production of Water-Insoluble Binder (A1e), High-Temperature Polymerization)

Water-insoluble binder composition (A1e) was obtained in the same manner as in step (Cp1-1) of Comparative Example 1 except that the monomer composition of 6 parts of acrylonitrile, 35 parts of 1,3-butadiene, 6 parts of methacrylic acid, and 53 parts of styrene was changed to 22 parts of acrylonitrile, 71 parts of 1,3-butadiene, and 7 parts of methacrylic acid. The residual amount of the organic compounds was then measured. The results are shown in Table 3.

### (Cp3-2. Production of Secondary battery)

Battery components and a battery were produced and evaluated in the same manner as in steps (1-2) to (1-6) of Example 1 except that water-insoluble binder composition (A1e) obtained in the aforementioned step (Cp3-1) was used in place of water-insoluble binder composition (A1) obtained in step (1-1). The results are shown in Table 3.

### <Comparative Example 4>

### (Cp4-1. Production of Water-Insoluble Binder (A1f), High-Temperature Polymerization)

Water-insoluble binder composition (A1f) was obtained in the same manner as in step (9-1) of Example 9 except that the steam distillation time was set not to 15 hours but to 6 hours, and the residual amount of the organic compounds was then measured. The results are shown in Table 3.

### (Cp4-2. Production of Secondary battery)

Battery components and a battery were produced and evaluated in the same manner as in steps (1-2) to (1-6) of Example 1 except that water-insoluble binder composition (A1f) obtained in the aforementioned step (Cp4-1) was used in place of water-insoluble binder composition (A1) obtained in step (1-1). The results are shown in Table 3.

**Table 1**

| | Ex. 1 | Ex. 2 | Ex. 3 | Ex. 4 | Ex. 5 | Ex. 6 |
|---|---|---|---|---|---|---|
| Artificial graphite particle diameter | 24.5 | 24.5 | 24.5 | 24.5 | 24.5 | 24.5 |
| Interplanar spacing | 0.354 | 0.354 | 0.354 | 0.354 | 0.354 | 0.354 |
| Silicon negative electrode | SiOC | SiOC | SiOC | SiOC | SiOC | SiOC |
| Ratio | 95/5 | 95/5 | 95/5 | 95/5 | 95/5 | 95/5 |
| Binder type | A1 | A2 | A3 | A1b | A1c | A4 |
| AN amount | 22 | 10 | 55 | 22 | 22 | 22 |
| Diene type | BD | BD | BD | BD | BD | BD |
| Diene amount | 71 | 83 | 38 | 71 | 71 | 71 |
| Polymerization method | Low temp. | Low temp. | Low temp. | Mod. temp. | Mod. temp. | Low temp. |
| Polymerzing temperature | 8 | 8 | 8 | 30 | 55 | 8 |
| Steam distillation time | - | - | - | - | - | - |
| Carboxylic monomer type | MAA | MAA | MAA | MAA | MAA | IA |
| Carboxylic monomer amount | 7 | 7 | 7 | 7 | 7 | 7 |
| Binder organic compound concentration | 200 | 200 | 200 | 300 | 480 | 300 |
| Organic compound concentration in composite particles | 200 | 200 | 200 | 300 | 480 | 300 |
| Peel strength | A | B | B | A | A | B |
| Initial capacity | A | A | A | A | B | B |
| Resistance | A | B | A | B | B | B |
| High temperature cycle property | A | B | B | C | C | B |
| High temperature storage property | A | B | B | C | C | B |

**Table 2**

| | Ex. 7 | Ex. 8 | Ex. 9 | Ex. 10 | Ex. 11 |
|---|---|---|---|---|---|
| Artificial graphite particle diameter | 24.5 | 24.5 | 24.5 | 24.5 | 24.5 |
| Interplanar spacing | 0.354 | 0.354 | 0.354 | 0.354 | 0.354 |
| Silicon negative electrode | SiOC | - | SiOC | SiOC | SiOC |
| Ratio | 95/5 | 100/0 | 95/5 | 95/5 | 95/5 |
| Binder type | A5 *1 | A1 | A1d | A8 | A9 |
| AN amount | 24 | 22 | 22 | 24 | 27 |
| Diene type | BD | BD | BD | BD | BD |
| Diene amount | 36 | 71 | 71 | 72 | 72 |
| Polymerization method | Low temp. | Low temp. | High temp. | Low temp. | Low temp. |
| Polymerzing temperature | 8 | 8 | 80 | 8 | 8 |
| Steam distillation time | - | - | 15 | - | - |
| Carboxylic monomer type | None | MAA | MAA | MAA | MAA |
| Carboxylic monomer amount | 0 | 7 | 7 | 4 | 1 |
| Binder organic compound concentration | 200 | 200 | 200 | 200 | 200 |
| Organic compound concentration in composite particles | 200 | 200 | 200 | 200 | 200 |
| Peel strength | C | A | B | B | B |
| Initial capacity | B | C | B | B | C |
| Resistance | B | B | B | B | B |
| High temperature cycle property | B | B | C | C | C |
| High temperature storage property | C | B | C | B | C |

**Table 3**

| | Comp. Ex. 1 | Comp. Ex. 2 | Comp. Ex. 3 | Comp. Ex. 4 |
|---|---|---|---|---|
| Artificial graphite particle diameter | 24.5 | 24.5 | 24.5 | 24.5 |
| Interplanar spacing | 0.354 | 0.354 | 0.354 | 0.354 |
| Silicon negative electrode | SiOC | SiOC | SiOC | SiOC |
| Ratio | 95/5 | 95/5 | 95/5 | 95/5 |
| Binder type | A6 *2 | A7 *1 | A1e | A1f |
| AN amount | 6 | 10 | 22 | 22 |
| Diene type | BD | None | BD | BD |
| Diene amount | 35 | - | 71 | 71 |
| Polymerization method | High temp. | High temp. | High temp. | High temp. |
| Polymerzing temperature | 80 | 80 | 80 | 80 |
| Steam distillation time | - | - | - | 6 |
| Carboxylic monomer type | MAA | MAA | MAA | MAA |
| Carboxylic monomer amount | 6 | 4 | 7 | 7 |
| Binder organic compound concentration | >2000 | >2000 | >2000 | 600 |
| Organic compound concentration in composite particles | >2000 | >2000 | >2000 | 600 |
| Peel strength | D | D | C | C |
| Initial capacity | C | C | C | C |
| Resistance | C | D | E | C |
| High temperature cycle property | C | D | E | D |
| High temperature D storage property | D | D | E | D |

Each of the abbreviations in Tables refers to the followings.
Artificial graphite particle diameter: volume average particle diameter (µm) of artificial graphite
Interplanar spacing: distance between graphite layers of artificial graphite (spacing between (002) planes by X-ray diffraction (d-value), nm)
Silicon negative electrode: type of silicon-containing negative electrode active material
Ratio: weight ratio of artificial graphite / silicon-containing negative electrode active material
AN amount: acrylonitrile amount (parts)
Diene type: type of aliphatic conjugated diene monomer
Diene amount: aliphatic conjugated diene monomer amount (parts)
Steam distillation time: distillation time (hours) when steam distillation was carried out after polymerization
Carboxylic monomer type: type of ethylenically unsaturated carboxylic acid monomer
Carboxylic monomer amount: ethylenically unsaturated carboxylic acid monomer amount (parts)
Binder organic compound concentration: residual amount of low molecular weight organic compounds in binder composition (ratio relative to the amount of the particulate polymer, ppm)
Organic compound concentration in composite particles: residual amount of low molecular weight organic compounds in composite particles (ratio relative to the amount of the particulate polymer, ppm)
BD: 1,3-butadiene
MAA: methacrylic acid
IA: itaconic acid
   *1: 2-hydroxyethyl acrylate was also used as a monomer.
   *2: Styrene was also used as a monomer.

As apparent from the results in Tables 1 to 3, Examples wherein the residual amount of the low molecular weight organic compounds is within the range defined by the present invention showed better tendencies in any of evaluations than those of Comparative Examples.

## Claims

1. A secondary battery negative electrode composite particle comprising a negative electrode active material and a particulate polymer,
wherein the particulate polymer includes 10% by weight to 60% by weight of a (meth)acrylonitrile monomer unit and 35% by weight to 85% by weight of an aliphatic conjugated diene monomer unit; and
a residual amount of an organic compound having an unsaturated bond and a boiling point of 150°C to 300°C is 500 ppm or less as a ratio relative to an amount of the particulate polymer.

2. The secondary battery negative electrode composite particle according to claim 1, wherein the particulate polymer further includes an ethylenically unsaturated carboxylic acid monomer unit.

3. A secondary battery negative electrode material comprising the secondary battery negative electrode composite particle according to claim 1 or 2.

4. A secondary battery negative electrode, comprising a current collector, and an active material layer provided on the current collector, the active material formed from the secondary battery negative electrode material according to claim 3.

5. The secondary battery negative electrode according to claim 4, wherein the active material layer is a layer formed by pressure molding of the secondary battery negative electrode material.

6. The secondary battery negative electrode according to claim 5, wherein the pressure molding is roll pressure molding.

7. A method for producing the secondary battery negative electrode composite particle according to claim 1 or 2, the method comprising the steps of:
dispersing in water a negative electrode active material and a composition containing a particulate polymer to obtain a slurry composition; and
granulating the slurry composition,
wherein the particulate polymer includes 10% by weight to 60% by weight of a (meth)acrylonitrile monomer unit and 35% by weight to 85% by weight of an aliphatic conjugated diene monomer unit, and
a residual amount of an organic compound having an unsaturated bond and a boiling point of 150°C to 300°C in the composition is 500 ppm or less as a ratio relative to an amount of the particulate polymer.

8. A secondary battery comprising the secondary battery negative electrode according to any one of claims 4 to 6.

## Patentansprüche

1. Ein Komposit-Partikel für die negative Elektrode einer Sekundärbatterie, umfassend ein negativelektroden-aktives Material und ein partikuläres Polymer,
wobei das partikuläre Polymer 10 Gew.-% bis 60 Gew.-% einer (Meth)acrylonitril-Monomereinheit und 35 Gew.-% bis 85 Gew.-% einer aliphatischen konjugierten Dien-Monomereinheit umfasst; und
eine Restmenge einer organischen Verbindung mit einer ungesättigten Bindung und einem Siedepunkt von 150°C bis 300°C relativ zur Menge des partikulären Polymers 500 ppm oder weniger beträgt.

2. Das Komposit-Partikel für die negative Elektrode einer Sekundärbatterie gemäß Anspruch 1, wobei das partikuläre Polymer des Weiteren eine ethylenisch ungesättigte Carbonsäure-Monomereinheit umfasst.

3. Ein negatives Elektrodenmaterial für eine Sekundärbatterie, umfassend das Komposit-Partikel für die negative Elektrode einer Sekundärbatterie gemäß Anspruch 1 oder 2.

4. Eine negative Elektrode einer Sekundärbatterie, umfassend einen Stromkollektor, und eine Schicht aus aktivem Material auf dem Stromkollektor, wobei das aktive Material hergestellt ist aus dem negativen Elektrodenmaterial für eine Sekundärbatterie gemäß Anspruch 3.

5. Die negative Elektrode einer Sekundärbatterie gemäß Anspruch 4, worin die Schicht aus aktivem Material eine Schicht ist, die durch Druckverpressen des negativen Elektrodenmaterials für eine Sekundärbatterie hergestellt ist.

6. Die negative Elektrode einer Sekundärbatterie gemäß Anspruch 5, wobei das Druckpressen ein Druckverpressen mit einer Rolle ist.

7. Ein Verfahren zur Herstellung des Komposit-Partikels für die negative Elektrode einer Sekundärbatterie gemäß Anspruch 1 oder 2, das Verfahren umfassend die Schritte:
Dispergieren eines negativelektroden-aktiven Materials und einer Zusammensetzung enthaltend ein partikuläres Polymer in Wasser zur Herstellung einer Aufschlämmungs-Zusammensetzung; und
Granulieren der Aufschlämmungs-Zusammensetzung,
wobei das partikuläre Polymer 10 Gew.-% bis 60 Gew.-% einer (Meth)acrylonitril-Monomereinheit und 35 Gew.-% bis 85 Gew.-% einer aliphatischen konjugierten Dien-Monomereinheit umfasst, und
eine Restmenge einer organischen Verbindung mit einer ungesättigten Bindung und einem Siedepunkt von 150°C bis 300°C in der Zusammensetzung relativ zur Menge des partikulären Polymers 500 ppm oder weniger beträgt.

8. Eine Sekundärbatterie umfassend die negative Elektrode einer Sekundärbatterie gemäß irgendeinem der Ansprüche 4 bis 6.

## Revendications

1. Une particule composite d'électrode négative de batterie secondaire comprenant un matériau actif d'électrode négative et un polymère particulaire,
dans laquelle le polymère particulaire inclut de 10% en poids à 60% en poids d'une unité monomère (méth)acrylonitrile et de 35% en poids à 85% en poids d'une unité monomère diène conjugué aliphatique ; et
une quantité résiduelle d'un composé organique ayant une liaison insaturée et un point d'ébullition allant de 150°C à 300°C est de 500 ppm ou moins, selon un ratio avec une quantité du polymère particulaire.

2. La particule composite d'électrode négative de batterie secondaire selon la revendication 1, dans laquelle le polymère particulaire comprend en outre une unité de monomère d'acide carboxylique éthyléniquement insaturé.

3. Un matériau d'électrode négative de batterie secondaire comprenant la particule composée d'électrode négative de batterie secondaire selon la revendication 1 ou la revendication 2.

4. Une électrode négative de batterie secondaire, comprenant un collecteur de courant, et une couche de matériau actif présente sur le collecteur de courant, le matériau actif étant formé à partir du matériau d'électrode négative de batterie secondaire selon la revendication 3.

5. L'électrode négative de batterie secondaire selon la revendication 4, dans laquelle la couche de matériau actif est une couche formée par un moulage sous pression du matériau d'électrode négative de batterie secondaire.

6. L'électrode négative de batterie secondaire selon la revendication 5, dans laquelle le moulage sous pression est un moulage sous pression par rouleau.

7. Un procédé pour produire la particule composite d'électrode négative de batterie secondaire selon la revendication 1 ou la revendication 2, le procédé comprenant les étapes consistant à :
disperser dans de l'eau une matière active d'électrode négative et une composition contenant un polymère particulaire pour obtenir une composition de suspension ; et
rendre granuleuse la composition de boue,
dans lequel le polymère particulaire comprend de 10% en poids à 60% en poids d'une unité monomère (méth)acrylonitrile et de 35% en poids à 85% en poids d'une unité monomère de diène conjugué aliphatique, et
une quantité résiduelle d'un composé organique ayant une liaison insaturée et un point d'ébullition allant de 150°C à 300°C dans la composition est de 500 ppm ou moins, selon un ratio avec une quantité du polymère particulaire.

8. Une batterie secondaire comprenant l'électrode négative de batterie secondaire selon l'une quelconque des revendications 4 à 6.
